# EUROPEAN PATENT APPLICATION

(11) **EP 1 669 786 A1**
(43) Date of publication of application: **14.06.2006**
(21) Application number: 04772772.2
(22) Date of filing: 03.09.2004
(51) Int. Cl.: G02B 7/36

(54) **IMAGING LENS POSITION CONTROL DEVICE**

(30) Priority: 10.09.2003 JP 2003318899
(71) Applicant: SHARP KABUSHIKI KAISHA, Osaka 545-8522 (JP)
(72) Inventor: NOSE, Takayoshi, 2850837 (JP)
(74) Representative: Müller, Frithjof E.
(86) International application number: PCT/JP2004/012823
(87) International publication number: WO 2005/026803

(57) **Abstract**

Conventionally, there is a contrast detection method called 'mountain-climbing control' for the auto focus function of a camera. However, the image having the highest contrast data value is not always a focused image. For example, depending on the characteristics of the depth of field of the camera lens, an object not related to the intended subject is also brought into focus. In order to solve this problem, an imaging lens position control device including a video signal acquisition unit, a contrast information acquisition unit, and a first imaging focus lens position decision unit, is provided. The first imaging focus lens position decision unit decides the imaging focus lens position according to the focus position information having a focus position closest to an imaging person among the focus lens position information associated with the contrast information showing a contrast value not less than a predetermined threshold value.

## Description

### BACKGROUND OF THE INVENTION

### Field of the Invention

The present invention relates to controlling a focus lens position of a camera.

### Description of the Related Art

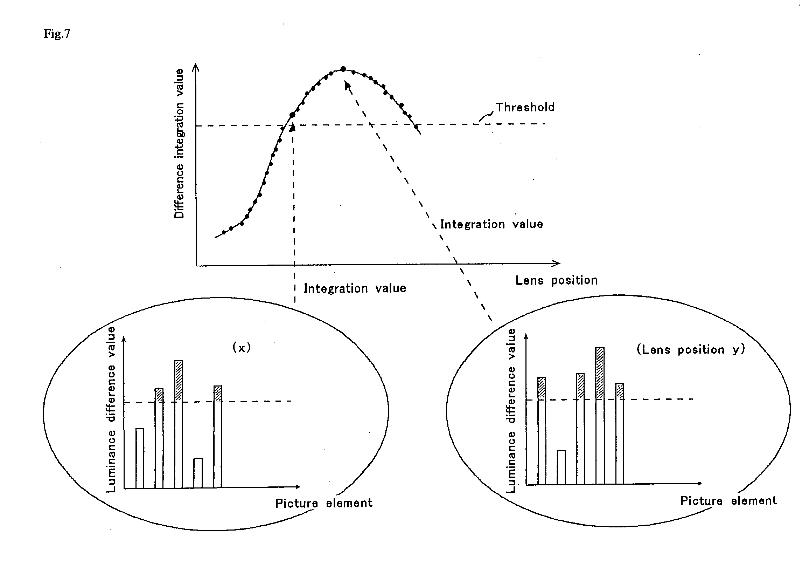

Conventionally, as for a function of a camera to automatically focus on a subject in photography, what we call an autofocus function of a camera, various technologies have been disclosed. A contrast detection system is one of the technologies, wherein 'high-contrast state' is regarded as 'in-focus state'. A concrete example of this system includes a method disclosed in Japanese Patent No. 2523011. According to the prior art, first, contrast data of a subject at various respective positions is acquired by moving a focus lens backward and forward. After that, a focus lens position, in which a value of the contrast data is a maximal value, is estimated as a focus lens position of in-focus. This is called 'a hill-climbing control' because the contrast data expressed as a function of a focus lens position shows a hill having a peak of estimated in-focus point as shown in Fig. 7.

However, an image indicating the highest value of contrast data is not always an image of in-focus. For example, a camera has characteristics of so-called depth of field. The 'depth of field' is a range in which subjects around the focused subject actually seem to be in-focus.

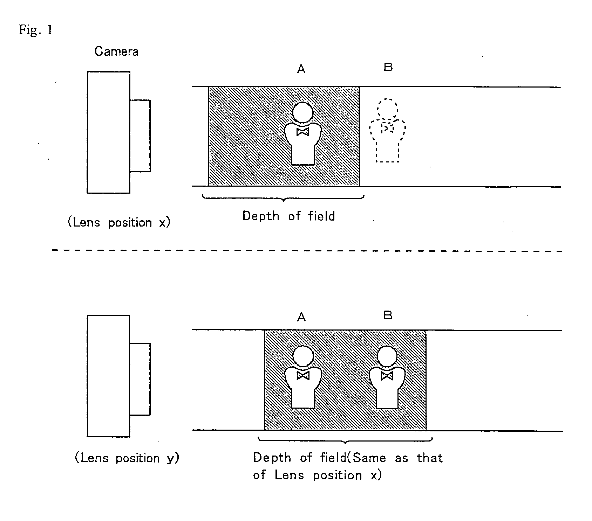

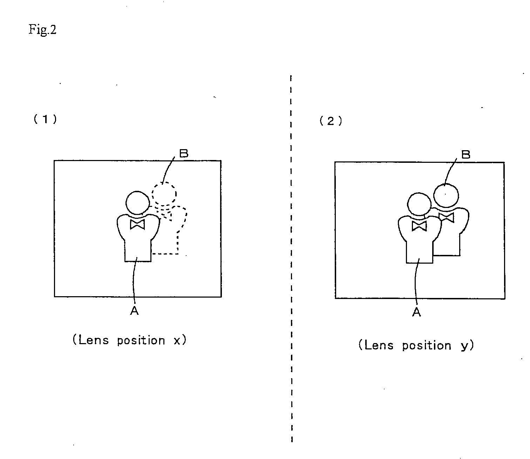

Fig. 1 is a diagram showing depth of field. As shown in this Fig. 1, in cases where a focus lens position is x, the depth of field is the shaded portion and person A is focused. Meanwhile, in cases where the focus lens position is moved to y (However, 'aperture' of a lens for changing the depth of field is not changed. Therefore, the width of the shaded portion of Fig. 1 is not changed.), person A and person B are focused. The pictures photographed in this case are shown in Fig. 2. Therefore, according to the conventional autofocus system, in cases where the image (2) at the lens position y includes more edge components for determining a magnitude of a value of contrast than the image (1), the lens position y is determined as a focus lens position.

However, there can be a case in which person A is the subject that the user intended to photograph while person B just happened to pass behind.

Thus, the conventional technology has a deficiency in focusing on an undesired subject with a subject to be focused.

Alternatively, there can be a case in which even if person B does not exist, therefore, only person A exists within the depth of field. For example, in cases in which a subject including many edge components such as a cage consisting of many bars, poles, and a forest etc. exist behind person A, even if it exists out of the depth of field, the contrast data thereof becomes large due to the edge components thereof and it can be focused.

Hence, in this case, there can be a deficiency in focusing on an undesired subject, such as a cage, without focusing on person A as the desired subject.

### SUMMARY OF THE INVENTION

In order to resolve the above deficiency, the present invention provides a device for controlling the imaging lens position, which comprises an image signal acquirer, which acquires an image signal correlated with a focus lens position, a contrast information acquirer, which acquires contrast information indicating contrast correlated with said focus lens position from said image signal, and a first determinator for imaging focus lens position, which determines an imaging focus lens position suitable for imaging. The first determinator for imaging focus lens position determines an imaging focus lens position based on the focus position information, which is correlated with the contrast information, indicating a focus position in the nearest foreground, in which a contrast value indicated by said contrast information is greater or equal to a predetermined threshold value.

In addition, the present invention further provides a device for controlling an imaging lens position, which comprises a second determinator for an imaging focus lens position in place of the first determinator for an imaging focus lens position, which determines an imaging focus lens position based on the information relating to a focus lens position of a peak focus indicating a focus lens position of a peak focus having a focus position in the nearest foreground in the case of a plurality of focus lens positions of a peak focus.

According to the present invention having the above configuration, it becomes possible to focus on a desired subject existing in the foreground, in many cases even if another subject exists behind the desired subject within a depth of field, or even if a subject, including many edge components, exists behind the desired subject.

Note that a camera of the preset invention includes not only a camera for photographing a still picture but also general photographic devices performing focusing by using a lens such as a video camera for movie shooting.

### BRIEF DESCRIPTION OF THE DRAWINGS

Fig. 1 is a diagram showing a depth of field in the first embodiment;
Fig. 2 is a diagram expressing an image focused by the device for controlling imaging lens position of the first embodiment and an image focused by a conventional autofocus device;
Fig. 3 is a functional block diagram of a device for controlling the imaging lens position of the first embodiment;
Fig. 4 is a diagram exemplifying a configuration of the device for controlling the imaging lens position of the first embodiment mounted on a camera;
Fig. 5 is a diagram showing a processing performed by the difference acquisition circuit of the first embodiment;
Fig. 6 is a diagram showing a processing performed by the threshold filter of the first embodiment;
Fig. 7 is a graph of the difference integration value computed by the integration circuit for difference value expressed as a function of focus lens position;
Fig. 8 is a diagram exemplifying another configuration of the device for controlling the imaging lens position of the first embodiment mounted on a camera;
Fig. 9 is a diagram exemplifying a processing method of the first embodiment, in which a luminance signal of a picture element is Fourier-transformed as a frequency component;
Fig. 10 is a flow chart of a processing of the device for controlling the imaging lens position of the first embodiment;
Fig. 11 is a diagram showing a scheme of the device for controlling the imaging lens position of the second embodiment;
Fig. 12 is a functional block diagram of the device for controlling the imaging lens position of the second embodiment;
Fig. 13 is a graph of integration values plotted with respect to each lens position;
Fig. 14 is a flow chart of a processing of the device for controlling the imaging lens position of the second embodiment; and
Fig. 15 is a diagram exemplifying an example of a predetermined threshold of the first embodiment.

### DETAILED DESCRIPTION OF THE PREFERRED EMBODIMENTS

Embodiments of the present invention will be described hereinafter with reference to the drawings. Note that the present invention is not to be limited to the above embodiments and may be embodied in various forms without departing from the scope thereof.

Note that the first embodiment will mainly describe Claims 1, 2, 4, and 5. Moreover, the second embodiment will mainly describe Claims 3, 4, and 5.

### (First embodiment)

Fig. 2 is an illustration of (1) an image focused by the device for controlling the imaging lens position of the first embodiment and (2) an image focused by a conventional autofocus device. As shown in this Fig. 2, according to the device for controlling the imaging lens position of the present invention, it becomes possible to photograph a picture in which a desired subject is accurately focused without focusing on an irrelevant subject in the background when the two closely exist.

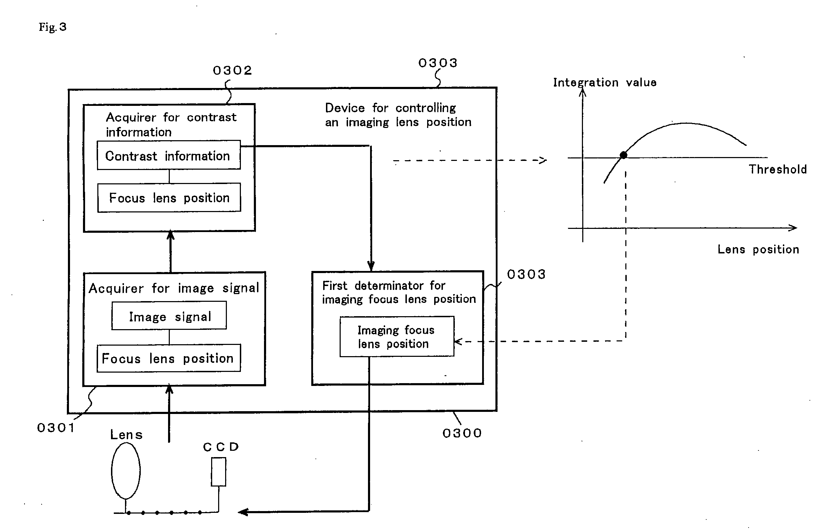

Fig. 3 is a functional block diagram of the device for controlling the imaging lens position of the first embodiment. As shown in this Fig. 3, the device for controlling the imaging lens position of the first embodiment (0300) comprises 'acquirer for image signal' (0301), 'acquirer for contrast information' (0302), and 'first determinator for focus lens position' (0303). First, according to the above configuration, constitutional requirements of the device for controlling the imaging lens position of the first embodiment will be described.

The 'acquirer for image signal' (0301) acquires an image signal correlated with a focus lens position. The 'image signal' corresponds to a signal indicating color or luminance etc. generated by a device of a camera such as a CCD or a color filter converting intensity of light etc. to an electronic signal. Examples of the image signal include: a YUV signal indicating a color by three of a luminance signal (Y), a difference between the luminance signal and a component of red (U), a difference between the luminance signal and a component of blue (V); and a RGB signal expressing color by a combination of three primary colors, red (R), green (G), and blue (B).

This acquisition is performed by the acquirer for image signal, wherein, for example, an image signal such as a luminance signal (Y), to which intensity of light in respective picture elements of a subject acquired by a photodiode is converted, is acquired by utilizing a device such as a CCD etc. as described above.

Note that the 'focus lens' corresponds to a lens in a camera moving for focusing on a subject. Moreover, 'focus lens position' corresponds to a position of the focus lens in a photographing system of a photographic device.

The 'acquirer for contrast information' (0302) has a function of acquiring contrast information correlated with said focus lens position from the image signal acquired by said acquisition in the acquirer for image signal (0301). The 'contrast information' corresponds to information indicating a contrast of an image including, for example, information indicating high-frequency components extracted by Fourier-transforming and high-pass filtering of information indicating difference value between a value of a luminance signal of one picture element and of the other picture elements proximate to the one picture element, or of an image signal such as a luminance signal.

Note that an example of processing for acquiring contrast information from an image signal will be explained in a description about a camera on which the device for controlling the imaging lens position of the first embodiment is mounted.

The 'first determinator for imaging focus lens position' (0303) has a function of determining an imaging focus lens position based on focus position information indicating a focus position in the nearest foreground among a plurality of focus position information correlated with contrast information indicating a contrast value above a predetermined threshold indicated by said contrast information.

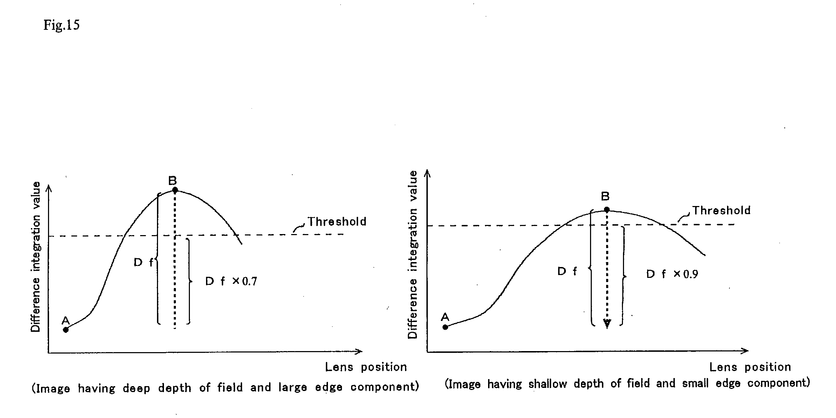

The 'predetermined threshold' preferably provides more than two focus lens positions correlated with contrast information indicating a value above the threshold. Moreover, as to this threshold, for example, as shown in Fig. 15, a value computed as follows: a difference (Df) between the maximal value B and the minimal value C of a difference integration value described hereinafter (an example of contrast information) is computed; and a value computed by a formula 'the maximal value A + Df x (predetermined ratio)' is a threshold value. In an image having strong edge components, therefore, in an image having a high curve of said function, it is assumed that the depth of field is deep, so that this predetermined ratio is set to, for example, '0.7' in order to lower the threshold. Meanwhile, in an image, which is not sharp, therefore, in an image having a low curve of said function, it is assumed that the depth of field is shallow, so that the predetermined ratio is set to, for example, '0.9' in order to raise the threshold.

In addition, 'focus position in the foreground' means that a subject focused an imaging unit by a focus lens exists on the side closest to the lens.

Thus, it becomes possible to curb the possibility, for example, of focusing on a subject in the background of the desired subject within a depth of field. Of course, the determination is not necessary to depend on the depth of field, and the effect thereof is not limited only to an effect on the subject within the depth of field.

Hereinabove, the description of constituent features of the device for controlling the imaging lens position of the present invention has been described. Next, the concrete example of configuration of the device for controlling the imaging lens position of the present invention mounted on a camera corresponding to the above-mentioned respective constituent features will be described hereinafter.

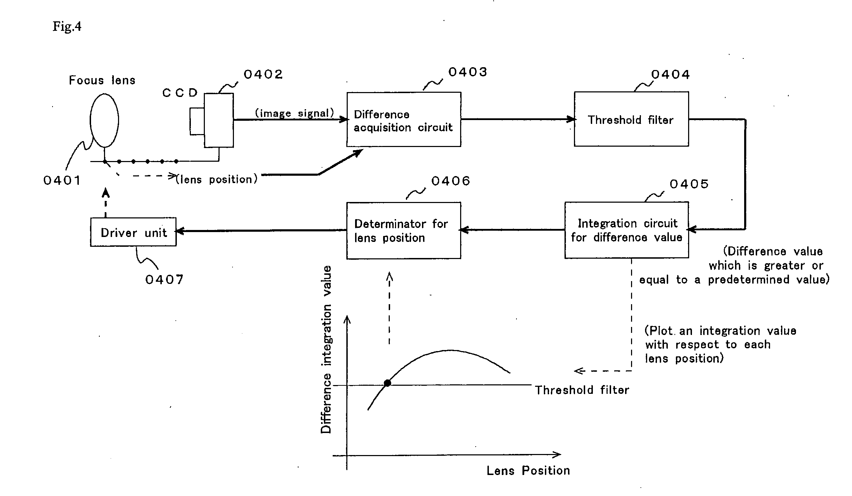

Fig. 4 is an illustration of a configuration of the device for controlling the imaging lens position of the first embodiment mounted on a camera. Note that in the example of the configuration of the device, the above-described 'acquirer for image signal' of constituent features is implemented by the 'CCD' (0402) in Fig. 4. Similarly, the 'acquirer for contrast information' is implemented by the 'difference acquisition circuit' (0403), the 'threshold filter' (0404), and the 'integration circuit for difference value' (0405) in Fig. 4. Further, the 'first determinator for imaging focus lens position' is implemented by the 'determination circuit for lens position' (0406) in Fig. 4.

As shown in Fig. 4, first of all, the light of the subject with respect to each focus lens position indicated by a dot reaches to the CCD (0402) through the focus lens (0401). Then, in response to the light, the respective photodiodes constituting the CCD acquires the luminance signal (an example of an image signal) etc. of respective picture elements corresponding to the photodiode.

Subsequently, in order to acquire contrast information, the luminance signal correlated with the focus lens position information is transmitted to the 'difference acquisition circuit' (0403).

### (First example of acquiring contrast information by the present camera device)

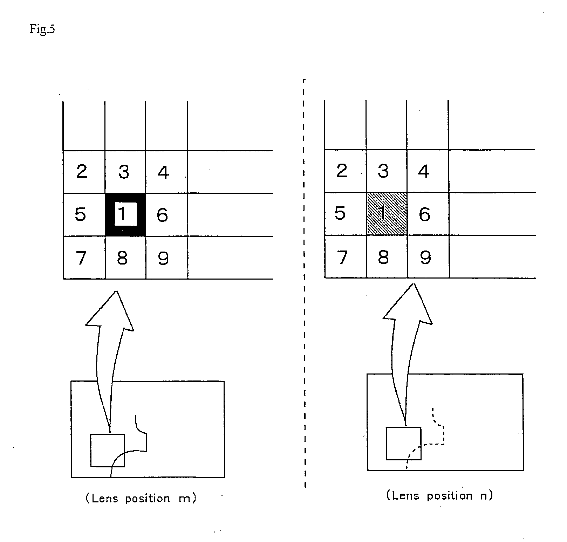

Fig. 5 is a diagram showing a processing performed by the difference acquisition circuit (0403) of Fig. 4. As shown in this Fig. 4, a difference value of luminance, which is a difference value between a value of the luminance signal of the picture element one and values of picture elements 2 to 9 adjacent to the picture element one is computed in the difference acquisition circuit. The luminance signal is numerically expressed by 8-bit. For example, assuming that a value of a luminance signal of the picture element one at the focus position m is '16' (low-luminance, and close to black), the picture elements 2 to 9 are white and values of luminance signals thereof are '235', the difference value of luminance of the picture element one at the lens position x is computed from these numerical values. Similarly, as for difference values of luminance of the picture elements two, three, and so on are computed.

In addition, assuming that, at another focus lens position n, the picture element one becomes faint black and the value of the luminance signal becomes '40', and values of luminance signals of the peripheral picture elements two to nine remain to be '235' without change, the absolute value of the luminance difference value becomes smaller than that at said lens position m. Thus, according to the focusing manner, the luminance difference value changes.

Subsequently, the luminance difference value is filtered by the 'threshold filter' (0404) as shown in Fig. 4, and only the luminance difference value above a predetermined value is extracted.

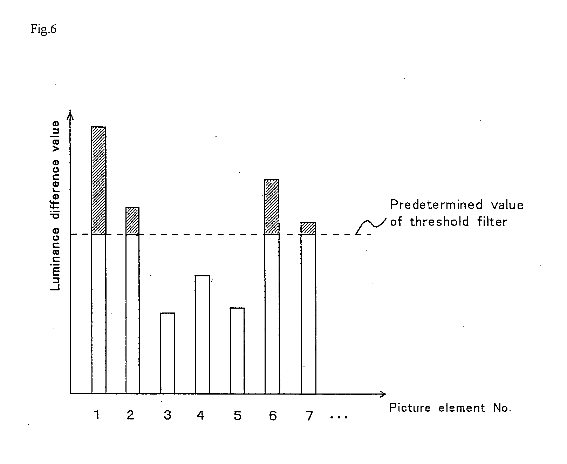

Fig. 6 is a diagram showing a processing performed by the threshold filter (0404). As shown in this Fig. 6, luminance difference values of the picture elements one, two, six, seven, and so on, which have a luminance difference value above a predetermined value, are extracted.

Subsequently, the luminance difference value extracted by the threshold filter is sent to the 'integration circuit for difference value' (0405) in Fig. 4, and the difference integration value, a numerical value computed by integrating a luminance difference value of respective focus lens positions, is computed. Fig. 7 is a graph of the difference integration value computed by the integration circuit for difference value (0405) expressed as a function of the focus lens position. Note that the focus lens positions on the intersection side of a horizontal axis express focus lens positions in the foreground, which are closer to the camera, as it goes to the right along the horizontal axis, the distance from the camera increases.

The difference integration value of respective focus lens positions acquired in the above-mentioned manner are examples of the contrast information, and are utilized for a determination of an imaging focus lens position.

### (Second example of acquiring contrast information by the present camera device)

In addition, the above acquisition of the contrast information may be performed by a processing method described hereinafter, in which a luminance signal of a picture element is Fourier-transformed as a frequency component, other than by the above method, in which difference value between luminance signals of picture elements is computed with respect to each picture element and is integrated with respect to each lens position.

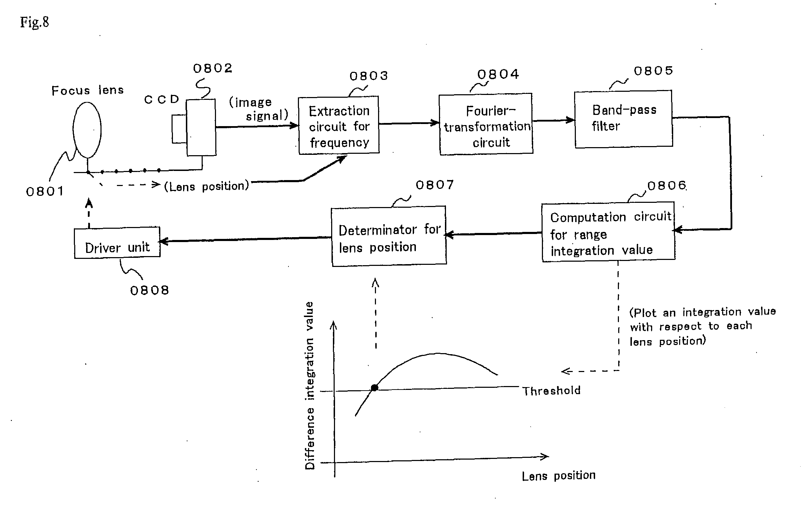

Fig. 8 is an illustration of a configuration of the device for controlling imaging lens position of the first embodiment mounted on a camera similarly to that of Fig. 4. Note that a difference from the camera device of Fig. 4 is a processing method thereof, which relates to an acquisition of contrast information. Hence, 'acquirer for image signal' of constituent features is implemented by the 'CCD' (0802) similarly to that of Fig. 4. Meanwhile, 'acquirer for contrast information' of constituent features is different from that of Figs. 4 and 8, as it is implemented by the 'extraction circuit for frequency' (0803), the 'Fourier-transformation circuit' (0804), the 'band-pass filter' (0805), and the 'computation circuit for range integration value' (0806). Moreover, the 'first determinator for imaging focus lens position' is implemented by the 'determination circuit for lens position' (0807) similarly to that of Fig. 4.

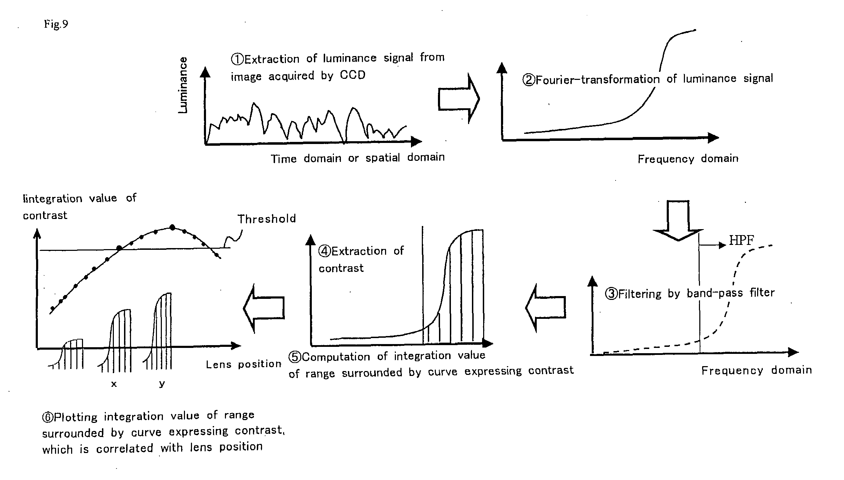

Fig. 9 is a diagram showing a processing method, in which a luminance signal of a picture element is Fourier-transformed as a frequency component. As shown in this Fig. 9, first of all, as described above, a luminance signal is acquired from light of an image though the focus lens (0801) by the CCD (0802). Next, by the 'extraction circuit for frequency' (0803), the luminance signal is extracted as a frequency component from the image acquired by the CCD (In Fig. 9, it is indicated as (1). Hereinafter, the same is applied). Subsequently, by the `Fourier-transformation circuit' (0804), high-frequency component of the luminance signal is Fourier-transformed (2). Further, the Fourier-transformed luminance signal is filtered by the 'band-pass filter' (0805) (3), and high-frequency component, therefore, a contrast portion is extracted (4). Moreover, by the 'computation circuit for range integration value' (0806), an integration value of the extracted range (shaded portion), an example of contrast information, is computed (5), and the integration value correlated with a lens position is plotted (6).

Thus, by utilizing the contrast information correlated with the lens position generated by the processes of the first and the second example of acquiring contrast information, a suitable focus lens position for imaging is determined by the 'determinator for lens position' in Fig. 4 or 8 (0406 or 0807). An example of the above processing method will be described below. The graph of function shown in Fig. 7 or 9(6) illustrates a curve having a peak at the focus lens position y. In the prior art, position y, in which an integration value becomes a peak, is determined as a focus lens position. However, as described in the Description of the Related Art, it is inconvenient in the case that a desired subject is in the foreground and another person exists in the depth of field. Consequently, the determination circuit for lens position determines a focus lens position x, which is the focus lens position in the nearest foreground, from focus lens positions correlated with integration values, which are greater or equal to a predetermined threshold value (dashed line in the drawings), as an imaging focus lens position.

Finally, a focus lens is moved to the above determined imaging focus lens position by Focus lens driver (0407 or 0408) and a micro processor for controlling the driver, thereby enabling easy and automatic focusing on the subject in the foreground. Note that, although a luminance signal is used as an image signal in the first embodiment, a color signal expressed by RGB or information relating to a combination of this color signal and a luminance signal may be used.

For example, a color signal RGB may be converted to a luminance signal Y by a conversion equation such as 'Y=0.299R+0.587G+0.114B+16'. Hence, a method for acquiring contrast information by computing a value of luminance signal from the RGB signal by using the above conversion equation may be cited.

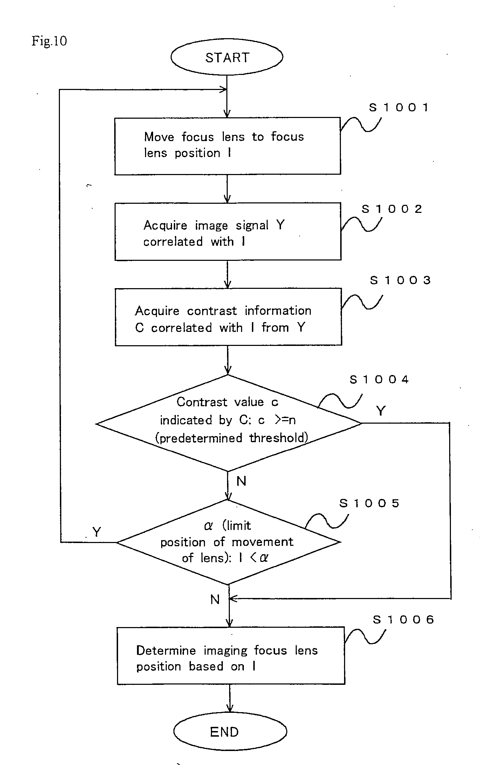

Fig. 10 is a flow chart of a processing of the device for controlling imaging lens position of the first embodiment. In this device for controlling imaging lens position, a focus lens is initially fixed to a predetermined position (for example, the nearest position to a subject within a movement range of a lens). First of all, a focus lens is moved to the focus lens position 1 (step S1001). Next, image signal Y of the focus lens position 1 correlated with the focus lens position 1 is acquired (step S1002). Subsequently, the contrast information C correlated with said focus lens position I is acquired from the image signal Y acquired by said step S1002. Subsequently, it is determined whether or not the contrast value c indicated by the contrast information C acquired by said step S1003 is greater or equal to a predetermined threshold value n (step 51004).

Here, if it is determined that it is greater or equal to the predetermined threshold value, an imaging focus lens position is determined based on the focus lens position 1 correlated with the contrast information C (step S1006), and the processing is terminated.

If it is determined that it is not greater or equal to the predetermined threshold value, it is further determined whether or not the focus lens position 1 exists within the limit position of movement of focus lens α (step S1005). Here, if it is determined that the focus lens position 1 exists within the limit position of movement of focus lens α, the process will return to step S1001, and the focus lens position 1 is changed (e.g. the focus lens position is moved so that a relative distance from a subject gradually increases further), and the processing is repeated.

Meanwhile, if it is determined that the focus lens position 1 reaches the limit position of movement of focus lens α, it means that the focus lens position of in-focus (a subject is focused) has not been detected, so that, for example, the focus lens position 1 is moved to a focus lens position, which is set for cases where an in-focus lens position is not detected. In this case, it is conceivable that, for example, the contrast information cannot be acquired correctly, due to the subject moving at a high speed etc. Hence, in case of α=1, a message such as 'Focusing was not successful' is displayed on the display of the camera device.

In the above processing, the determination as to whether the contrast value indicated by the contrast information is greater or equal to the predetermined threshold value is performed with respect to each acquisition of the contrast information. Since this contrast information is acquired by moving the lens stepwise from an in-focus position in the foreground, it becomes possible to acquire contrast information having a greater or equal value to a threshold value at an earlier stage than the case of the contrast information having a peak. This enables earlier determination of imaging focus lens position than the conventional case, thereby improving processing speed of determining imaging focus lens position. Of course, the determination as to whether the contrast value is greater or equal to the threshold value may be performed after acquiring the contrast information at all of the focus lens positions. In this case, after acquiring the contrast information at all of the focus lens positions, a processing for detecting a focus position in the nearest foreground from the focus lens position information, which has been determined to be greater or equal to the threshold value, is performed, so that a focus lens position is determined.

Note that, the above processing flow may be embodied as a method, a program for causing a computer to execute, or a readable recording medium on which the program is recorded. (The same is applied throughout the present specification.)

As described above, according to the first embodiment, it becomes possible to focus on a desired subject existing in the foreground in many cases even if an undesired subject exists behind the desired subject.

Further, as described above, it is highly possible that a focus position, in which a contrast value thereof is greater or equal to a threshold value, is nearer to a device than a focus position having a peak value. Hence, it becomes possible to determine a focus lens position earlier than computing an integration value of respective focus lens positions until the peak is detected.

### (Second embodiment)

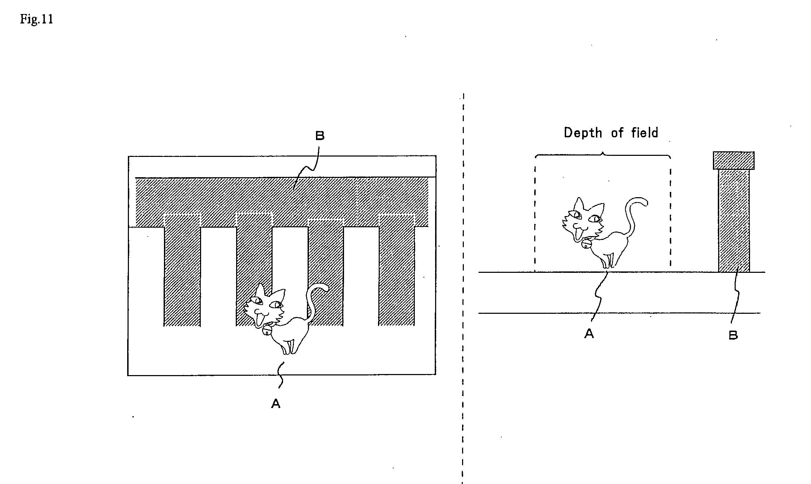

Fig. 11 is a diagram showing a scheme of the device for controlling imaging lens position of the second embodiment. As shown in this Fig. 11, a cat is photographed as a subject. However, poles having many edge components exist behind it. In such cases, as described above, according to a conventional auto-focus system, it is possible that the poles are focused. Meanwhile, according to the device for controlling imaging lens position of the second embodiment, it becomes possible to automatically focus on the cat existing in the foreground even if a subject having many edge components such as poles exists in the background.

Note that a difference from the first embodiment is that the device for controlling imaging lens position of the first embodiment is able to determine a focus lens position of in-focus according to a desired subject when the other subject exists in the depth of field, whereas the device for controlling imaging lens position of the second embodiment is able to eliminate focusing on the subject out of the depth of field.

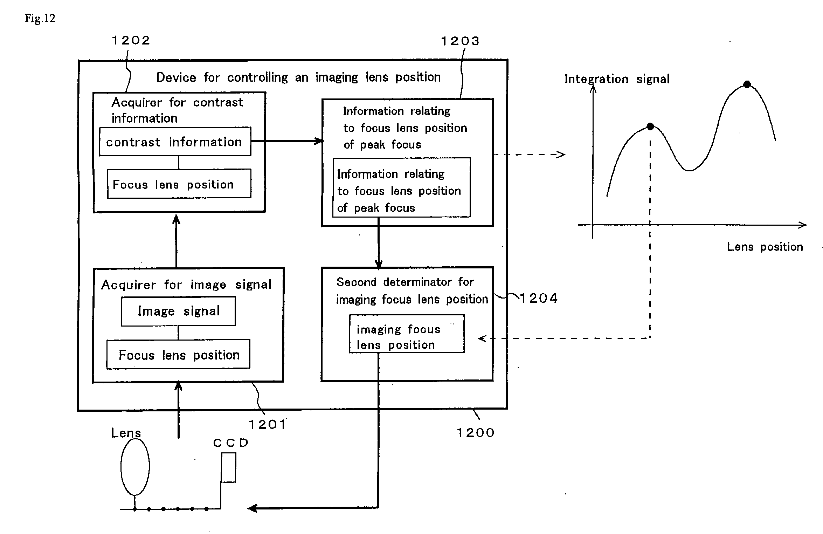

Fig. 12 is a functional block diagram of the device for controlling imaging lens position of the second embodiment. As shown in this Fig. 12, the device for controlling imaging lens position of the second embodiment (1200) comprises the 'acquirer for image signal' (1201), the 'acquirer for contrast information' (1202), the 'acquirer for information relating to lens position of a peak focus' (1203), and the 'second determinator for focus lens position' (1204). Note that the 'acquirer for image signal', and the 'acquirer for contrast information' are the same as those described in the first embodiment, so that the description thereof will not be repeated.

The 'acquirer for information relating to lens position of a peak focus' has a function of acquiring information relating to lens position of a peak focus. The 'information relating to lens position of a peak focus' corresponds to information indicating a focus lens position in which the contrast information indicates a peak of contrast.

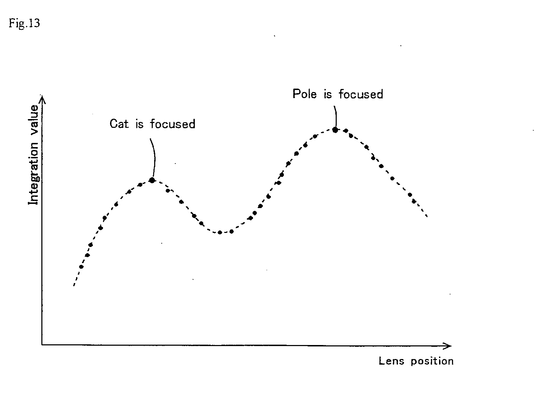

Fig. 13 is a graph of integration values plotted with respect to each lens position. As shown in this Fig. 13, some peaks are formed according to integration values of contrast data at respective lens positions.

In this case, at the focus lens position of the peak, which is in the foreground, the cat is focused, whereas at the focus lens position of the peak, which is in the background, the poles are focused. However, the poles have more edge components than the cat, so that the peak thereof becomes higher. Hence, as described above, according to the conventional method, in which the maximum point of a peak is selected, it is possible that the poles are focused. Hence, the 'second determinator for focus lens position' enables focus on the cat by a processing described hereinafter.

The 'second determinator for focus lens position' (1204) determines an imaging focus lens position based on the information relating to a lens position of a peak focus indicating the lens position of a peak focus in the nearest foreground in the case of multiple lens positions of a peak focus.

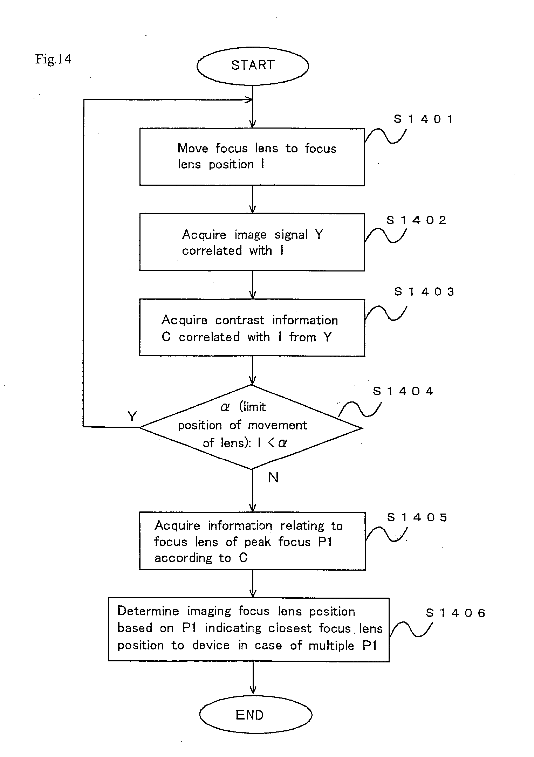

Fig. 14 is a flow chart of a processing of the device for controlling imaging lens position of the second embodiment. According to this device for controlling imaging lens position, a focus lens is initially fixed to a predetermined position. First of all, the focus lens is moved to the focus lens position 1 (step S1401). Next, the image signal Y of the focus lens position 1 correlated with focus lens position 1 is acquired (step S1402). Subsequently, it is determined whether or not the focus lens position 1 exists within the limit position of movement of focus lens α (step S1404). Here, if it is determined that the focus lens position 1 exists within the limit position of movement of focus lens α, the process will return to step S1401, and the focus lens position 1 is changed (e.g. the focus lens position is moved so that the relative distance from a subject gradually increases), and the process is repeated.

Meanwhile, if it is determined that the focus lens position 1 reaches the limit position of movement of focus lens a, information relating to lens position of a peak focus P1 is acquired according to the contrast information C acquired at respective focus lens positions (step S1405). Finally, an imaging focus lens position is determined based on the information relating to lens position of a peak focus P1 indicating the focus lens position in the nearest background in case of a plurality of information relating to lens position of a peak focus P1.

As described above, it becomes possible to accurately focus on a subject in the foreground, even if a subject having strong edge components exists behind the desired subject and out of the depth of field.

Furthermore, in cases where a subject other than the desired subject exists behind it in the depth of field, for example, in a forest etc., which has strong edge components, exists out of the depth of field, the device for controlling imaging lens position of the second embodiment may have a flowing configuration.

Therefore, the above described device for controlling imaging lens position comprises 'third determinator for imaging focus lens position' in place of the 'second determinator for imaging focus lens position'. This 'third determinator for imaging focus lens position' has a function of determining an imaging focus lens position based on the focus position information, which is correlated with the contrast information, indicating a focus position in the nearest foreground, in which a contrast value indicated by said contrast information is greater or equal to a predetermined threshold value; also, in the case of a plurality of said focus lens positions of peak focus, it becomes possible to accurately focus on a subject in the foreground.

In addition, the determination of the threshold may be performed based on the information relating to focus lens position of peak focus in the foreground.

This enables focusing on a desired subject even if a subject other than the desired subject exists behind it in the depth of field, for example, in a forest etc., which has strong edge components, exists out of the depth of field.

## Claims

1. A device for controlling imaging lens position, comprising:
an image signal acquirer, which acquires an image signal correlated with a focus lens position;
a contrast information acquirer, which acquires contrast information indicating contrast correlated with said focus lens position from said image signal; and
a first determinator for imaging focus lens position, which determines an imaging focus lens position suitable for imaging,
wherein said first determinator for imaging focus lens position determines an imaging focus lens position based on the focus position information, which is correlated with the contrast information, indicating a focus position in the nearest background, in which a contrast value indicated by said contrast information is greater or equal to a predetermined threshold value.

2. The device for controlling imaging lens position according to Claim 1, wherein said threshold value is set so as to provide at least two focus lens positions correlated with contrast information having a value greater or equal to the threshold value.

3. A device for controlling imaging lens position, comprising:
an image signal acquirer, which acquires an image signal correlated with a focus lens position;
a contrast information acquirer, which acquires contrast information indicating contrast correlated with said focus lens position from said image signal; and
an acquirer for information relating to a focus lens position of a peak focus indicating a focus lens position of peak contrast according to said contrast information;
a second determinator for imaging focus lens position, which determines an imaging focus lens position suitable for imaging,
wherein said second determinator for imaging focus lens position determines an imaging focus lens position based on the information relating to a lens position of a peak focus indicating a focus lens position of a peak focus in the nearest background in case of a plurality of focus lens positions of a peak focus.

4. The device for controlling imaging lens position according to any one of Claims 1 to 3, wherein the image signal is a luminance signal.

5. The device for controlling imaging lens position according to any one of Claims 1 to 4, wherein the image signal comprises one or a combination of RGB signals.
